**Europäisches Patentamt**

**European Patent Office**

**Office européen des brevets**

(19)

(11) Veröffentlichungsnummer: **0 072 821**
**B1**

(12) # EUROPÄISCHE PATENTSCHRIFT

(45) Veröffentlichungstag der Patentschrift:
26.10.88

(51) Int. Cl.⁴: **G 01 N 21/37**

(21) Anmeldenummer: **82900534.7**

(22) Anmeldetag: **23.02.82**

(86) Internationale Anmeldenummer:
**PCT/CH 82/00026**

(87) Internationale Veröffentlichungsnummer:
**WO 82/02950 (02.09.82 Gazette 82/21)**

(54) **OPTISCHER GASANALYSATOR, VORZUGSWEISE OPTOAKUSTISCHER GASDETEKTOR.**

(30) Priorität: 25.02.81 CH 1266/81
26.03.81 CH 2058/81
24.07.81 CH 4853/81
29.10.81 CH 6901/81

(43) Veröffentlichungstag der Anmeldung:
02.03.83 Patentblatt 83/9

(45) Bekanntmachung des Hinweises auf die Patenterteilung:
26.10.88 Patentblatt 88/43

(84) Benannte Vertragsstaaten:
AT BE CH DE FR GB LI LU NL SE

(56) Entgegenhaltungen:
DE - A - 2 217 421
US - A - 3 562 524
US - A - 3 659 452
US - A - 3 784 836
US - A - 3 987 304
US - A - 4 124 302

Applied Optics, vol. 14, no. 8, published in August 1975, New York (US). L. Rosengren: "Optimal optoacoustic detector design", pages 1960-1976
Applied Optics, vol. 18, no. 17, published on 1st September 1979, New York (US). R. Adamowicz et al.: "Characteristics of a photoacoustic air pollution detector...", pages 2938-2946

(73) Patentinhaber: **OEHLER, Oskar, Streulistrasse 24, CH-8032 Zürich (CH)**
Patentinhaber: **FRIES, Alexis, In der Lachen 11, CH-8953 Dietikon (CH)**

(72) Erfinder: **OEHLER, Oskar, Streulistrasse 24, CH-8032 Zürich (CH)**
Erfinder: **FRIES, Alexis, In der Lachen 11, CH-8953 Dietikon (CH)**

(74) Vertreter: **Frei, Alexandra Sarah, c/o Frei Patentanwaltsbüro Hedwigsteig 6 Postfach 95, CH-8029 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf den Geieten der optischen Spektroskopie sowie der geometrischen Optik und betrifft einen optischen Gasanalysator, vorzugsweise opto-akustischen Gasdetektor, d.h. eine wenig aufwendige Detektionsvorrichtung für den selektiven Nachweis von Gasen. Die Vorrichtung besteht im wesentlichen aus einem in einem fast geschlossenen Ellipsoid-Reflektor angeordneten, thermisch oder mechanisch modulierten Glühkörper, dessen Licht einer Detektionszelle zugeführt wird. Dieser Ellipsoid-Reflektor enthält entweder direkt das Messgas, oder er ist evakuiert resp. mit einem im Messgas-Absorptionsbereich nicht absorbierenden Schutzgas gefüllt. Im ersten Fall wird das aus dem Ellipsoid austretende Licht einem Breitband-Detektor in Kombination mit einem Schmalband-Interferenzfilter oder einem Schmalband-Detektor zugeführt. Im zweiten Fall der nicht lichtabsorbierenden Ellipsoid-Füllung wird das Licht nach Passieren eines Schmalband-Interferenzfilters in eine das Messgas enthaltende photoakustische Zelle eingestrahlt. Die Messung wird in diesem letzteren Fall bei vollständig oder annähernd verschlossener photoakustischer Zelle durchgeführt. Die akustische Entkopplung während der Messung und der Austausch des Gases in der photoakustischen Zelle kann durch Kapillaren in der Zellenwandung, Flüssigkeitssperren, oder gravitationsgeteuerten Kugelventilen zusammen mit einer Gas-Fördereinrichtung, welche ihrerseits auf einem Kleinlautsprecher basiert, oder durch eine Absperr-Fördereinrichtung, die aus der Kombination von Membranpumpen und Tellerventilen aufgebaut ist, gewährleistet werden.

Die Erfassung des Mikrophonsignals und dessen Verarbeitung geschieht mittels eines digitalen off-line arbeitenden Lock-in-Verstärkers, der von einem Mikroprozessor gesteuert wird. Mit einer einzigen Prozessor-Einheit können Gasspülung und Signalverarbeitung mehrerer Detektionseinheiten parallel oder seriell gesteuert werden.

Die Erzeugung eines fast-parallelen Lichtstrahles aus von einer quasi punktförmigen Lichtquelle abgestrahlten Lichts ist aus den allgemeinen Lehren der geometrischen Optik bekannt. Zu diesem Zweck werden in der Regel parabolische oder sphärische Spiegel bzw. sphärische oder asphärische Linsensysteme, also optische Kondensoren, verwendet. Ist man an einer grossen Strahlungsausbeute der Lichtquelle interessiert und soll der Lichtstrahl ausserdem eine kleine Divergenz aufweisen, so sind grosse geometrische Abmessungen des das Lichtbündel erzeugenden optischen Systems unumgänglich. Beim Bau von optischen Spektrometern ist dies nachteilig und von massgebender Bedeutung; denn eine gute Auflösung erfordert einerseits bei den üblicherweise verwendeten Dispersions- oder Interferenz-Monochromator-Systemen eine kleine Divergenz der gebündelten Lichtstrahlen am Monochromator – dieselbe Bedingung muss bei der Verwendung eines Schmalbandinterferenzfilters gestellt werden – und andererseits ist man in der Regel bestrebt, dass ein möglichst grosser Anteil der Strahlung aus der Lichtquelle verwendet werden kann.

Bei Infrarot-Spektrometern muss der atmosphärischen Absorption im Strahlengang, dies vor allem wegen Wasserdampf, besonders durch Spülen mit trockener Luft oder Evakuieren des ganzen Gerätes Rechnung getragen werden. Es dürfte allein aus diesen Gründen bei gewissen Anwendungen der Wunsch nach einem optischen System vorhanden sein, das bei kleinen geometrischen Abmessungen einen intensiven Lichtstrahl mit kleiner Divergenz liefert.

Bei Verwendung von Interferenzfiltern sind die Anforderungen bezüglich der Divergenz nicht allzu gross. Zur Vermeidung einer unerwünschten Veränderung der Bandpasseigenschaften des Interferenzfilters soll der halbe Öffnungswinkel des Lichtbündels unterhalb 15 Winkelgraden liegen. Auch beim nicht verschlossenen Gerät ist aus dem erwähnten Grunde wünschenswert, dass der Lichtstrahl über eine möglichst kurze Distanz durch die umgebende Atmosphäre geführt wird.

Die herkömmlichen Licht/Kondensor-Systeme befriedigen diese Anforderungen nur ungenügend.

In jedem Falle ist es notwendig, dass die Lichtquelle intensitätsmoduliert wird. Meistens wird dies mechanisch mit Hilfe einer rotierenden Segmentscheibe vorgenommen. Da aber preisgünstige Detektoren (beispielsweise pyroelektrische Elemente oder photoakustische Zellen) vielfach bei niedriger Frequenz optimal betrieben werden, kann oft unter Verzicht auf einen mechanischen Lichtunterbrecher die Lichtquelle direkt thermisch moduliert werden. Diese Lösung ist für ein einfaches, zuverlässig arbeitendes Gas-Detektionssystem besonders günstig.

Dem Kohlendioxid kommt bei der Gasdetektion eine besondere Bedeutung zu. Auf der einen Seite kann es mit kleinem Aufwand kaum detektiert werden – die billigen und bewährten Metalloxid-Halbleitersensoren sprechen nicht auf $CO_2$ an – auf der anderen Seite lässt sich beispielsweise die Luftqualität in Klimaanlagen oder das Auftreten von Bränden durch Detektion des $CO_2$-Gehaltes der Luft beurteilen. $CO_2$ absorbiert sehr stark und spezifisch infrarotes Licht. Eine optische Bestimmung des $CO_2$ drängt sich damit geradezu auf und wird auch oft angewandt. Die relativ hohe $CO_2$-Konzentration in der Luft und der grosse Absorptionskoeffizient erfordern aber nicht unbedingt, dass auf die hochempfindliche opto-akustische Methode zurückgegriffen werden muss; es genügt eine Extinktionsmessung, d.h. eine Bestimmung der Lichtabschwächung im Probegas. Bei einer solchen Messung ist es aber absolut notwendig, dass die Intensität des Lichtstrahles vor Eintritt in die Absorptionszelle sehr genau bekannt ist, da ja die Konzentrationsbestimmung aus der Differenz der Lichtintensität der für das Gas spezifischen Wellenlänge vor und nach der Licht-Absorptionsstrecke erfolgt. Üblicherweise wird deshalb ein Teil des Lichtes durch eine Hilfsoptik, z.B. einen halbdurchlässigen Spiegel, ausgekoppelt. Das erfordert aber zusätzlichen Material- und Adjustierungsaufwand.

Aus der US-A-3 562 524 ist eine optische Detektionsvorrichtung gemäss dem Oberbegriff des Patentanspruchs 1 bekannt. Der dort vorgeschlagene rotationselliptische Reflektor lässt jedoch den grössten Teil des Ellipsoids frei, so dass sein Wirkungsgrad begrenzt ist und auf keinen Fall ein scharf gebündelter Strahl längs der grossen Hauptachse des Ellipsoids erzeugt wird. Zum Bau eines kleinen optischen Systems, welches eine hohe Strahlungsausbeute der Lichtquelle erlaubt und nur eine kleine Divergenz des Lichtstrahls zulässt, gibt dieser bekannte Vorschlag keine Anregung.

Auch eine weitere vorgeschlagene Einrichtung gemäss der US-A-3 784 836 sieht im Bereich der grossen Hauptachse eine weite Öffnung vor, welche sogar den auf dieser Seite liegenden Brennpunkt der Ellipse ausserhalb des Reflektors liegen lässt. Das Rest-Ellipsoid übt dabei eine rein fokussierende Wirkung aus, wodurch sich zwar eine gewisse Lichtsammelwirkung ergibt, nicht jedoch die scharfe Bündelung zu einem energiereichen Strahl, die für die hier ins Auge gefasse Anwendung erforderlich ist. In bevorzugten Ausbildungen ist eine kettenartige Weiterleitung wenig stark gebündelter Lichtstrahlen von einem Brennpunkt in denjenigen eines benachbarten offenen ellipsoid- oder paraboloidförmigen Reflektors vorgesehen, um durch diese aufwendigen Massnahmen einen möglichst stark kollimierten Lichtstrahl zu erhalten. Für die hier angestrebte scharfe Bündelung längs der Hauptachse des Ellipsoids liefert auch dieser Vorschlag keine Anregung. Wegen der weiten Öffnung des Ellipsoids im Bereich der Hauptachse führt dieser Vorschlag eher von einer optimalen Lösung weg.

Die erwähnte scharfe Bündelung längs der Hauptachse des Ellipsoids ist jedoch aus DE-A-2 217 421 bekannt, worauf in der Figurenbeschreibung noch eingegangen wird.

Zur Gewährleistung eines langen Lichtweges und damit zur Erreichung einer grossen Abschwächung des Strahles bei beschränkter Abmessung der Messvorrichtung werden für Extinktionsmessungen von Gasen oft Zellen eingesetzt, in denen das Licht mehrfach hin und her reflektiert wird, sog. Mehrfach-Reflexions-Zellen. Bei denselben ist es notwendig, dass der einfallende Strahl eng gebündelt ist. Der Bau solcher Zellen ist in der Regel aufwendig; zudem muss das Spiegelsystem sehr genau adjustiert sein.

Eine interessante Ausführungsform einer Mehrfach-Reflexionszelle ist in der oben genannten amerikanischen Patentschrift 3 562 524 vom 9. Febr. 1971 durch D.F. Moore und W.S. Beerman beschrieben worden. Die Gasabsorptionskammer besitzt in jenem Fall die Form eines kugelförmigen Hohlreflektors mit lichtstreuender Oberfläche (sog. Ulbricht-Kugel). Der Messlichtstrahl wird mittels eines elliptischen Reflektors durch einen Spalt in der Kugelfläche in das Kugelinnere übertragen. Die reflektierende und streuende Innenfläche der Kugel bewirkt durch Mehrfachstreuung einen langen optischen Lichtweg und eine homogene Ausleuchtung des Kugelinnern. Der Lichtdetektor kann daher an beliebiger Stelle in der Kugel positioniert werden. Zur Verhinderung einer direkten Beleuchtung des Detektors befindet sich zwischen Lichteintrittsspalt und Detektor gegebenenfalls eine Blende.

Ein schwerwiegender Nachteil bei Mehrfach-Reflexions-Zellen ist die Alterung, die durch Änderungen des Lichtreflexionsvermögens der Spiegel und Dejustierung der Optik-Geometrie bedingt ist. Es sind daher öfters Eichmessungen nötig.

Für den Nachweis niedrig konzentrierter atmosphärischer Gasverunreinigungen, wie Kohlenmonoxid, Stickoxid oder Methan, hat sich die photoakustische Gasdetektionsmethode sehr gut bewährt. Dieselbe besteht darin, dass die Druckänderungen, die in einer Gasmischung bei Absorption von monochromatischem Licht (vornehmlich Infrarotstrahlung) durch eine Gaskomponente entstehen, durch ein Mikrophon erfasst werden, wie das etwa im Artikel von L.G. Rosengren, Applied Optics, Vol. 14, Seite 1960, (1975) nachzulesen ist. Für photoakustische Messungen werden meistens intensive, Infrarotlaser verwendet.

Die Tatsache, dass die Hauptbestandteile der Luft, nämlich Stickstoff, Sauerstoff und Argon – im Rahmen der Dipolnäherung – keine Infrarotstrahlung absorbieren, wirkt sich dabei günstig aus. Beispielsweise konnte L.B. Kreuzer wie es in J. Appl. Physics, Vol. 42, Seite 2934 (1971) beschrieben ist, Methan in Stickstoff, entsprechend einer Konzentration von 10 ppb ($10^{-8}$) mit Hilfe eines 16 mW-Lasers nachweisen. Es wird weiter die Vermutung geäussert, dass bei Verwendung intensiver Infrarot-Laserstrahlung Konzentrationen bis $10^{-13}$ gemessen werden können.

Unter wesentlich schwächeren Anforderungen an die Empfindlichkeit der Gasdetektion lässt sich das Nachweissystem stark vereinfachen. Insbesondere kann der kostspielige abstimmbare Infrarotlaser durch ein einfaches System, bestehend aus einem Glühkörper und einem Schmalband-Interferenzfilter, ersetzt werden. In neuerer Zeit ist von M.J.D. Low und G.A. Parodi in Infrared Physics, Vol. 20, Seite 333 (1980) zwar ein auf dem photoakustischen Effekt beruhendes Infrarot-Spektrometer beschrieben worden, bei dem statt des Lasers ein Glühstift verwendet worden ist. Diese Quelle hat sich allerdings wegen ihrer Intensitätsschwäche in Kombination mit einem Gitter-Monochromator für ein photoakustisches Infrarot-Spektrometer nicht gut bewährt.

Intensitätsmässig bringt der Ersatz des Gittermonochromators durch ein Interferenzfilter Vorteile – allerdings auf Kosten von Flexibilität und Genauigkeit.

Bei einer Kategorie von Gasanalysatoren, die auf dem photoakustischen Effekt beruhen, ist der Infrarotlaser erfolgreich durch einen Glühkörper ersetzt. Es handelt sich um die sog. nichtdispersiven photo-akustischen Gasanalysatorsysteme, die in vielfältigen Konstruktionen vorliegen. Es sei in diesem Zusammenhang etwa auf die folgenden Schriften des Deutschen Patentamtes hingewiesen: Auslegungsschrift 2 751 047 von O.H. Blunck und Offenlegungsschrift 2 748 089 von U. Deptolla und W. Fabinski. Bei diesen nichtdispersiven Systemen gibt nicht die absorbierte Lichtmenge, welche von der dem Filter angepassten Gaskomponente absorbiert wurde, direkt zum Mikrophonsignal Anlass, sondern es wird die Differenz der Lichtabschwächung zwischen Probegas und einem Referenzgas selektiv gemessen. Die gasselektive Lichtintensitäts-Differenzmessung wird mittels einer photo-akustischen Differenzmesszelle bestimmt, die mit Gas der zu untersuchenden Komponente gefüllt ist. Es resultieren daraus die grossen Vorteile, dass keine monochromatische Lichtquelle erforderlich ist und dass beim Übergang auf den Nachweis eines anderen Gases nur die entsprechende Gasfüllung in der photo-akustischen Zelle, resp. die Zelle selbst ausgetauscht werden muss. Andererseits sind diese Systeme im Aufbau etwas kompliziert, da im Zusammenhang mit der Differenzsignal-Messung der Lichtstrahl aufgespalten und die beiden Komponenten sehr genau abgeglichen sein müssen.

Photo-akustische Zellen werden erfolgreich sowohl in akustischer Resonanz als auch in Nicht-Resonanz eingesetzt.

Bei einer in akustischer Resonanz betriebenen opto-akustischen Zelle ist es allenfalls möglich, dieselbe während der Messung offen zu halten, falls die Öffnung im Knoten des akustischen Resonators angebracht ist. Im Nicht-Resonanz-Fall, wo bei tiefer Modulationsfrequenz des Lichts gearbeitet wird, ist es unumgänglich, die Zelle während der Messung verschlossen zu halten. Der lichtabsorptionsbedingte Druckanstieg in der Zelle würde einerseits durch eine grosse Öffnung in der Wandung ständig ausgeglichen, was darauf hinausläuft, dass der photo-akustische Effekt abgeschwächt oder gar verhindert ist. Andererseits würden durch die Öffnung atmosphärische Druckfluktuationen (Raumschall) in die Zell eingekoppelt. Das könnte aber die Messung sehr stark stören, wenn nicht gar verunmöglichen. Bei nichtdispersiven photo-akustischen Systemen ist dieses Problem nicht vorhanden, da dort die Zelle mit dem Messgas vom photo-akustischen Detektionsraum getrennt ist.

Beim photo-akustischen Effekt, der darauf beruht, dass Infrarotstrahlung durch das zu untersuchende Gas absorbiert wird, macht sich die schwache Strahlungsabsorption an den Wandungen der photo-akustischen Zelle störend bemerkbar, wie in einem Artikel von L.B. Kreuzer, erschienen in J. Appl. Physics, Vol. 42, Seite 2934 (1971) nachzulesen ist. Beschränkt man sich aber auf eine Nachweisgrenze für Gaskonzentrationen im ppm-Bereich ($10^{-6}$), so kann die Lichtreflexion an der Zellenwandung insofern Vorteile bringen, als dass das Licht die Zelle mehrfach durchläuft und somit der Lichtweg vergrössert wird. Solche sog. photo-akustische «multiple pass»-Zellen sind beispielsweise von R.D. Kamm, J. Appl. Physics, Vol. 47, Seite 3550 (1976) für den Nachweis von N-Butan in Stickstoff erfolgreich eingesetzt worden.

Da eine korrekte Gaskonzentrationsbestimmung bedingt, dass die Zelle vor der Messung gut gespült werden kann, ist für den Fall von identischer Probegas- und Detektions-Zelle ein alternierender Spül-Mess-Vorgang unumgänglich.

Das Mikrophon- bzw. Lichtdetektor-Signal besitzt einen alternierenden Anteil mit der Periodizität des intensitätsmodulierten Lichtes, das in die photo-akustische Zelle fällt. Zur Erfassung dieses Signals werden nach dem Stand der Technik zu diesem Zweck Lock-in-Verstärker eingesetzt. Das sind Vorrichtungen, die aus einem Signal denjenigen Anteil herausfiltrieren und verstärken, der mit einem Referenzsignal frequenzgleich ist und zudem zu demselben in fester Phasenbeziehung steht. Analog arbeitende Geräte sind auf dem Markt in grösserer Vielfalt erhältlich.

Unter den bei uns auftretenden Gegebenheiten einer sehr tiefen Modulationsfrequenz von unter 15 Hz und der Möglichkeit, dass der Glühkörper direkt durch ein vom Lock-in-Verstärker intern erzeugtes Referenzsignal gesteuert werden kann, bringt ein digital arbeitendes, von einem Mikrocomputer gesteuertes Gerät gegenüber der herkömmlichen Konstruktion Vorteile. Es sei in diesem Zusammenhang auf eine der wenigen Beschreibungen eines digital arbeitenden Lock-in-Verstärkers von S. Cova und A. Longoni in Rev. Sci. Instrum., Vol. 50, Seite 296 (1979) hingewiesen. Es handelt sich dabei um durchwegs on-line arbeitende Geräte, d.h. um Schaltungen, bei denen die Signalverarbeitung fortlaufend durchgeführt wird. In unserem Fall eines abwechslungsweisen Gaswechsel- und Messvorgangs würde aber die Stabilisierungszeit eines on-line-Gerätes vor der Messung, die das Mehrfache der Zeitkonstanten ausmachen kann, eine entsprechend kleine Messrate bedingen. Nebst der Erfassung und Verarbeitung des Mikrophonsignales ist die Überwachung des Gaswechsels notwendig – eine Aufgabe, die von einem Mikrocomputer sehr leicht übernommen werden kann.

Es ist Aufgabe der Erfindung, unter Vermeidung der beschriebenen Nachteile ein kostengünstiges, flexibel verwendbares und selektiv arbeitendes Gasdetektionssystem zu schaffen, das auf den Prinzipien der optischen Spektroskopie beruht. Es stellen sich in diesem Zusammenhang folgende Teilaufgaben:

Schaffung einer optischen Vorrichtung von kleiner geometrischer Abmessung, die es mit wenig Adjustieraufwand erlaubt, bei optimaler Lichtausbeute der Lichtquelle, einen Lichtstrahl mit kleinem Querschnitt und kleiner Divergenz d.h. einen scharf gebündelten Strahl in einem von der Atmosphäre vollständig, teilweise oder icht abgeschlossenen System zu erzeugen.

Die optische Vorrichtung ist in der Weise zu schaffen, dass das Lichtemissionsvermögen der Vorrichtung bestimmt werden kann.

Ferner ist es Aufgabe der Erfindung, die optische Vorrichtung derart zu schaffen, dass sie sich zum Zweck der Gasdetektion eignet.

Weiter ist es Aufgabe der Erfindung, eine Vorrichtung zu schaffen, mit welcher das Messgas ausgetauscht werden kann. Bei Verwendung von photo-akustischen Gasmesszellen soll diese Vorrichtung gleichzeitig die akustische Abkopplung der Zelle gewährleisten.

Die Aufgabe wird gelöst durch die in den unabhängigen Ansprüchen 1 und 3 definierten Merkmale, insbesondere durch die Anordnung mindestens eines kleinen Glühkörpers, z. B. eines Glühwendels, in einem der beiden Brennpunkte eines vollständig oder teilweise geschlossenen Rotations-Ellipsoid-Reflektors und der Auskopplung des gebildeten Mess-Strahlenbündels durch eine Öffnung in Richtung der verlängerten grossen Hauptachse des Ellipsoids. Gegebenenfalls kann das Referenz-Strahlenbündel durch eine zusätzliche Öffnung in der entgegengesetzten Richtung der verlängerten grossen Hauptachse des Ellipsoids ausgekoppelt werden.

Die Modulation des Glühkörpers kann thermisch oder mechanisch mit Hilfe einer rotierenden Sektorscheibe erzeugt werden. Als Monochromator wird mindestens ein optisches Schmalband-Bandpassfilter, vorzugsweise ein Interferenzfilter, verwendet. Mehrere optische Filter können auf einer drehbaren Scheibe angeordnet werden, die beispielsweise gleichzeitig die Aufgabe des Lichtmodulators übernimmt.

Zur Lichtmessung wird entweder ein nicht gasselektiv arbeitender Detektor, beispielsweise ein pyroelektrisches Element, oder eine photoakustische Messzelle, die das Messgas enthalten kann, verwendet.

Im letzteren Fall kann der Wirkungsgrad der Gasdetektion durch Anbringen eines Spiegels auf der Rückseite der photoakustischen Zelle verbessert werden.

Da die Zelle in akustischer Nicht-Resonanz und bei niedriger Frequenz betrieben wird, demzufolge nicht simultan gemessen und das Messgas ausgetauscht werden kann, muss die Zelle vor der Detektion mit dem Messgas jeweils gespült werden. Dies geschieht durch enge Kapillaren in der Zellenwandung, oder unter Verwendung eines nicht linearen, auf hydrodynamischen Prinzipien basierenden Durchflusssystems, das in der Funktionsweise einem Schmitt-Trigger gleicht.

Zur forcierten Gasumwälzung dient eine Fördereinrichtung, die im wesentlichen auf einem Kleinlautsprecher mit aluminiumbedampfter Kunststoff-Membrane basiert.

Die Erfassung und Verarbeitung des Mikrophonsignals geschieht mittels eines off-line arbeitenden digitalen Lock-in-Verstärkers, dem ein Mikrocomputer zugrunde liegt. Derselbe steuert zusätzlich den Austausch des Gases in der photoakustischen Zelle und gegebenenfalls den Wechsel des Interferenzfilters vor, sowie die Lichtquellenmodulation während der Messung. Mit einem einzigen Mikrocomputersystem können mehrere Detektions-Zellen simultan oder sequenziell angesteuert und deren Ausgangssignale verarbeitet werden.

Eine Verwendung der Vorrichtung wird in Anspruch 17 beschrieben.

Die Erfindung wird im folgenden anhand der beiliegenden Zeichnungen beschrieben. Es zeigen:

Fig. 1 eine Übersicht der funktionellen Komponenten der Gasdetektionsvorrichtung.

Fig. 2 ein Parabol-Reflektor gemäss Stand der Technik mit einer Lichtquelle im Brennpunkt,

Fig. 3 ein Ellipsoid-Halbreflektor gemäss Stand der Technik mit einer Lichtquelle im einen Brennpunkt,

Fig. 4 ein Ellipsoid-Reflektor gemäss Erfindung mit einer Lichtquelle im einen der beiden Brennpunkte und der Lichtauskoppelung in Richtung der grossen Hauptachse,

Fig. 5 Charakterisierungen der Intensitätsübertragung des in Fig. 4 dargestellten Ellipsoid-Reflektors,

Fig. 6 ein Detail der Ausführungsform gemäss Fig. 4 mit einer Aufhängung eines Glühwendels, den Massnahmen zur Auskoppelung des Lichtes sowie mit einem Stutzen zum Auspumpen des Reflektors und zum Adjustieren des Wendels,

Fig. 7 Prinzip erklärende Skizze des Ellipsoid-Reflektors gemäss Fig. 4 mit Auskoppelung von Mess- und Referenz-Strahl,

Fig. 8 weitere Ausführungsform des in Fig. 4 dargestellten Ellipsoid-Reflektors,

Fig. 9 ebenfalls eine weitere Ausführungsform des in Fig. 4 dargestellten Ellipsoid-Reflektors,

Fig. 10 Ellipsoid-Reflektor mit mechanischem Lichtunterbrecher im Messstrahl,

Fig. 11 mögliche Ausführungsform eines kombinierten Monochromator-Lichtunterbrechers,

Fig. 12 und 13 Prinzip des Ellipsoid-Reflektors mit Auskoppelung von Mess- und Referenz-Signal und Anordnung der Detektor-Zellen,

Fig. 14 selektiver nichtdispersiver photo-akustischer Gasanalysator gemäss Stand der Technik,

Fig. 15 Abschwächung von Probe- und Referenz-Strahl beim nichtdispersiven opto-akustischen Gasanalysator,

Fig. 16 Anwendung des Ellipsoidreflektors für nicht dispersive Gasanalyse,

Fig. 17 Übersicht über das erfindungsgemässe selektive Gassensorsystem,

Fig. 18 Infrarot-Spektrum von Kohlenmonoxid; gleichzeitig eingezeichnet ist die Störung durch Wasser,

Fig. 19 Ellipsoid-Reflektor-Zelle mit Messgas-Austausch-Vorrichtung,

Fig. 20 Fördereinrichtung für Gaswechsel,

Fig. 21 und 22 Ellipsoid-Reflektor-Zelle mit abgetrenntem Lichtquellenteil,

Fig. 23 photo-akustische Zelle mit Gasaustausch durch Kapillaren,

Fig. 24 photo-akustische Zelle mit akustischer Flüssigkeitsabsperrung und zusätzlicher Flüssigkeitsaustauschvorrichtung.

Fig. 25 photoakustische Zelle mit akustischer Absperrung mittels flüssigkeitsgefüllten Kapillaren,

Fig. 26 photoakustische Zelle mit kombinierter Gasaustausch-Absperrvorrichtung.

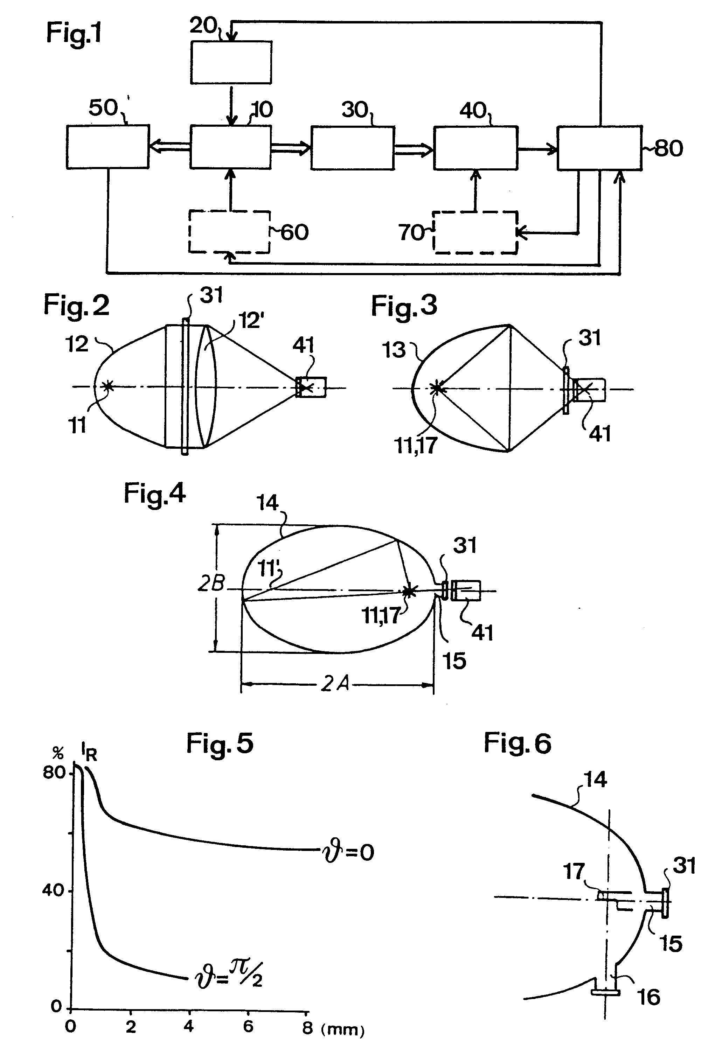

Fig. 1 ist eine Übersichtsdarstellung der funktionellen Komponenten der Gasdetektionsvorrichtung. Die von der Lichtquellenvorrichtung 10 ausgehende, durch den Lichtmodulator 20 intensitätsmodulierte Strahlung wird einerseits als Messstrahl nach Passieren des Monochromators 30 der Mess-Detektorzelle 40 zugeführt, andererseits gegebenenfalls als Referenzstrahl dem Referenz-Detektor 50. Das Probengas befindet sich entweder in der ersten Lichtquellenvorrichtung 10, wobei es mit Hilfe der Gasaustauschvorrichtung 60 ausgetauscht wird, oder aber in der Mess-Detektorzelle 40, die in diesem Falle als photoakustische Zelle ausgebildet ist. Die zweite Gasaustauschvorrichtung 70 sorgt in diesem letzteren Fall für den Gasaustausch vor und für die akustische Entkopplung der Zelle während der Messung. Die elektrischen Signale der Detektorzelle 40 und gegebenenfalls Referenz-Detektorzelle 50 werden von der Auswerte- und Steuervorrichtung 80 erfasst und verarbeitet. Des weiteren steuert diese Vorrichtung den Lichtmodulator 20, die Gasaustauschvorrichtung 60 bzw. 70 und allenfalls den Monochromator 30. Die einzelnen Komponenten werden im folgenden detailliert behandelt.

Anhand der Darstellung von Fig. 2 und Fig. 3 wird auf den bereits oben beschriebenen Stand der Technik bezüglich der Lichtquellenvorrichtung 1 eingegangen.

Die Erfindung basiert nun auf folgender Tatsache. Den Gesetzen der geometrischen Optik zufolge läuft ein von Brennpunkt 11 eines Ellipsoids gemäss Fig. 4 ausgehender Lichtstrahl, nach einer Reflexion an der Reflektorwandung in den Brennpunkt 11' (und umgekehrt).

Verfolgt man einen solchen Lichtstrahl, so stellt man fest, dass er sich mit zunehmender Anzahl der Reflexionen an der Reflektorwandung immer mehr der grossen Hauptachse nähert und schon nach wenigen Reflexionen praktisch mit derselben zusammenfällt.

Eine in einem der beiden Brennpunkte angebrachte Lichtquelle erzeugt daher in der grossen Hauptachse ein sehr intensives, im Idealfall paralleles Lichtbündel.

Durch eine kleine Öffnung in einem der Durchstosspunkte der grossen Hauptachse mit der Ellipsoidoberfläche (z.B. bei 15 in Fig. 4), ist es möglich, dieses Lichtbündel auszukoppeln. Die Weite der Öffnung hat allerdings die Nebenwirkung, dass ein Strahl das Reflektorsystem verlassen kann, bevor er in die grosse Hauptachse fällt. Dieser Umstand bewirkt die Entstehung eines Lichtkegels an der Ellipsoidöffnung, dessen Öffnungswinkel durch den Durchmesser dieser Öffnung einerseits und die Ellipsoidparameter andererseits determiniert ist.

Die Verwendung von geschlossenen ellipsoidförmigen Reflektoren ist nicht neu. Solche Spiegel werden gelegentlich eingesetzt, um das Licht eines kleinen Strahlers mit hoher Effizienz einer kleinen Probe zuzuführen. Alles Licht, das von der Quelle im einen Brennpunkt ausgeht, gelangt nach einer Reflexion an der Ellipsoidfläche auf die Probe im anderen Brennpunkt.

Im Gegensatz dazu durchläuft, wie bereits erwähnt, das Licht bei der Vorrichtung von Fig. 4 die beiden Brennpunkte, oder deren nähere Umgebung, mehrmals, wobei eine Lichtsammlung längs der grossen Ellipsoid-Hauptachse zustande kommt und somit ein intensiver Strahl durch eine Öffnung in Verlänerung dieser Achse ausgekoppelt werden kann. Dieses Prinzip der Lichtsammlung und der Auskopplung ist in der deutschen Offenlegungsschrift Nr. 2 217 421 veröffentlicht am 25. Okt. 1973, durch W. Dost beschrieben worden.

Konkrete Anwendungen dieser Lichtsammlungsmethode sind allerdings bisher unbekannt. Das ist nicht weiter verwunderlich, denn einerseits war das Problem der mehrfachen Durchdringung des Lichtes durch die im einen Brennpunkt angeordnete Lichtquelle nicht gelöst, andererseits ist diese Art der Lichtsammlung für die meisten Anwendungen völlig wertlos. Da die einzelnen Lichtstrahlen das Ellipsoid nach einer unterschiedlichen Anzahl Reflexionen verlassen und zudem Abschattungen durch die Quelle unvermeidbar sind, ist die Erzielung einer genauen Abbildung der Quelle, oder die Erreichung eines homogenen exakten Parallelstrahles unmöglich.

Bei Verwendung des vorgesehenen Filter-Monochromators müssen an die Parallelität des Strahles keine hohen Ansprüche gestellt werden. Ebenso ist die fehlende Homogenität des Strahles unkritisch.

Bei der in Fig. 4 dargestellten Lichtsammelvorrichtung kann eingewendet werden, dass sie im Idealfall einer genau punktförmigen, optimal emittierenden Lichtquelle, die genau im einen Brennpunkt eines fehlerfreien Ellipsoids angebracht ist, überhaupt nicht funktionieren kann. Alles Licht, das die Quelle emittiert, wird nach zwei Reflektionen an der Ellipsoidfläche wieder auf den Emitter zurückgeworfen und dort absorbiert. W. Dost war sich, laut der erwähnten Offenlegungsschrift, dessen durchaus bewusst. Aus diesem Grunde verlangte er, dass in den Brennpunkten keine Materie vorhanden sein darf.

Wie sich allerdings gezeigt hat, besitzt die Vorrichtung mit wendelförmiger Lichtquelle von beachtlicher Transparenz und gegenüber der Grösse des Ellipsoids kleinen Dimensionen günstige Lichtsammlungseigenschaften. Das auf die Wendel zurückgeworfene Licht geht ohnehin nicht verloren, es bewirkt eine zusätzliche Aufheizung des Glühkörpers.

Das Filter 31, dessen Dimension nun klein gehalten werden kann, befindet sich in der Nähe der Öffnung 15. Die Detektorzelle 41 ist unmittelbar dahinter angeordnet.

Berechnungen mit Hilfe einer Computersimulation haben ergeben, dass bei einem Reflexionsvermögen der Ellipsoid-Innenfläche 14 von 95% für den Fall, dass sich eine punktförmige Lichtquelle im Brennpunkt 11 befindet, 84% des vom Wendel 17 abgestrahlten Lichtes die 1 cm weite Austrittsöffnung 15 nach einigen Reflexionen, bei einem Winkel zur grossen Hauptachse von maximal 8.9 Grad, verlässt. Dabei liegen 53% der ausgetretenen Lichtstrahlen innerhalb eines Konus mit 3° halbem Öffnungswinkel (die Ellipsoid-Halbachsen wurden mit einer Länge von 7.2 und 6 cm angenommen).

Die Computersimulation ergab ferner, dass beim Abweichen der Position der Lichtquelle aus dem Brennpunkt die Lichtausbeute stark abfällt – hauptsächlich in Richtung senkrecht zur grossen Hauptachse (vgl. Fig. 5, $\vartheta = \pi/2$: Richtung senkrecht zur grossen Hauptachse).

Fig. 5 stellt die Intensitätsübertragung in Funktion der Abweichung der Lichtquellen aus dem Brennpunkt 11 dar.

Unter Berücksichtigung dieser Tatsachen ergab die Computerrechnung für einen in der grossen Hauptachse liegenden 2 mm langen Glühfaden eine totale Intensitätsübertragung von 56%.

Die aufgrund der Computersimulation erhaltenen Resultate wurden experimentell an einem Reflektor der genannten Dimensionen in sehr befriedigender Weise bestätigt.

Wie erwähnt, fällt die Lichtausbeute der beschriebenen erfinderischen Vorrichtung ab, wenn sich die Lichtquelle ausserhalb des zugeordneten Brennpunktes im Ellipsoid befindet. Eine gute Adjustierung oder Zentrierung der Lichtquelle ist daher wichtig. Dieser Forderung kann beispielsweise sehr einfach nachgekommen werden, indem der zur Evakuation oder Gasfüllung verwendete Stutzen 16, wie er in Fig. 6 abgebildet ist, derart angeordnet wird, dass er mit seiner Längsachse auf den Brennpunkt zeigt. Wird paralleles Licht durch die Öffnung 15 längs der grossen Hauptachse eingestrahlt, so wird ein Grossteil desselben in den Brennpunkten fokussiert. Die im einen Brennpunkt sich befindliche Wendel 17 ist also beleuchtet, sobald sie richtig adjustiert ist.

Wie bereits erwähnt, ist der Abfall der Lichtausbeute vor allem in senkrechter Richtung $\vartheta = \pi/2$) zur grossen Hauptachse beträchtlich. Da nicht auszuschliessen ist, dass sich die Lage des Glühkörpers bezüglich des Brennpunktes 11 im Laufe der Zeit ändert und zudem das Reflexionsvermögen des Reflektors 15 beispielsweise durch Verschmutzung Änderungen unterworfen ist, ist es angezeigt, eine Referenzmessung durchzuführen.

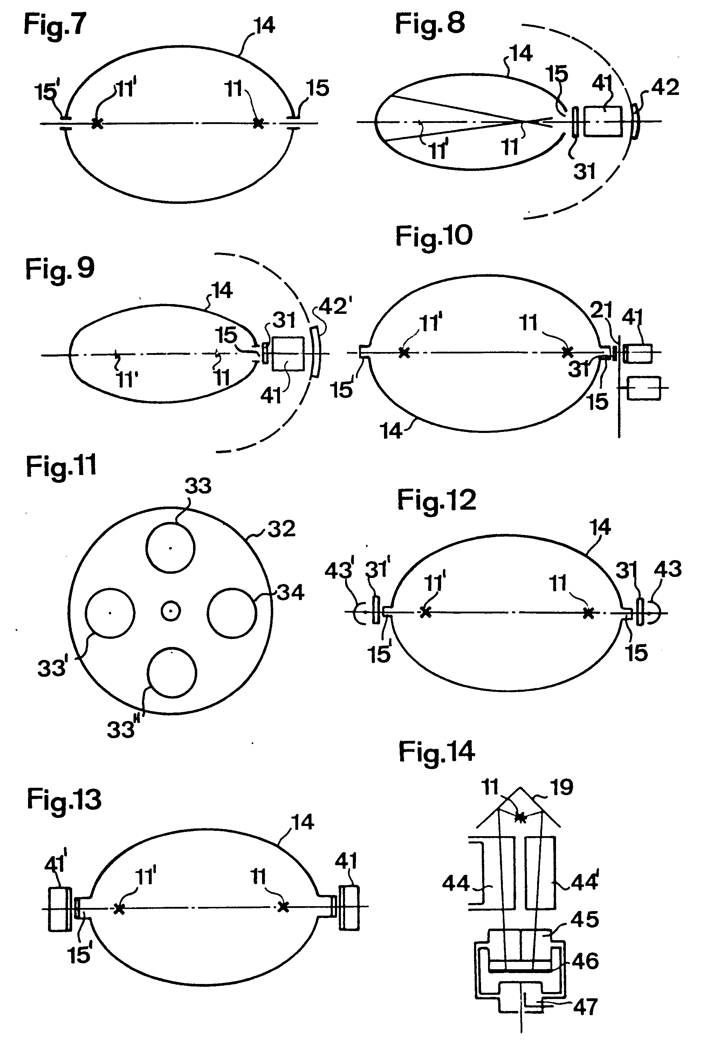

Dieses Problem kann gelöst werden, indem beispielsweise ein Referenzstrahl durch eine zweite, sich beispielsweise auf der grossen Hauptachse befindliche und der Öffnung 15 gegenüberliegende Öffnung 15' aus dem Ellipsoidreflektor ausgekoppelt wird, wie das in Fig. 7 dargestellt ist.

Diese Anordnung erlaubt eine weitgehende Elimination der rein durch die Geometrie bedingten Veränderungen der Lichtausbeute der Vorrichtung, denn bedingt durch die mehrfachen Reflexionen ist die Lichtintensität bei 15 zu derjenigen bei 15' annähernd proportional. Dies gilt selbst unter der Voraussetzung, dass sich in der Nähe des Brennpunktes 11' eine von derjenigen beim Brennpunkt 11 verschieden intensive, oder gar keine Lichtquelle befindet.

Es ist allerdings festzuhalten, dass die zweite Öffnung 15' im Ellipsoid 14 gegenüber der Konstruktion mit einer Öffnung 15 zu einer Abschwächung der Lichtintensität für kleine Austrittswinkel führt.

Die Erfindung kann noch auf die folgende Weise ergänzt werden:

Um die oben beschriebene Nebenwirkung der Öffnung 15 zu vermindern, wird auf der, dem Ellipsoid-Reflektor, abgewandten Seite der Zelle 41 ein zusätzlicher elliptischer Reflektor 42 angebracht, dessen Brennpunkte mit denjenigen des Reflektors 14 übereinstimmen. In Fig. 8 ist diese Anordnung dargestellt. Damit kann erreicht werden, dass die durch die Zelle 41 führenden Strahlen in die beiden Brennpunkte 11 und 11' zurückgeworfen werden. Dadurch erhöht sich die Effizienz der Lichtsammlungsvorrichtung.

Da der aus dem Ellipsoidreflektor 14 austretende Lichtstrahl nur leicht divergent ist, ist nur ein kleiner Teil des zusätzlichen Reflektors 42 wirksam. Aus diesem Grunde lässt sich derselbe durch einen sphärischen Hohlspiegel 42' mit Zentrum im einen Ellipsoidbrennpunkt, beispielsweise im nähergelegenen Brennpunkt 11, approximieren, wie das in Fig. 9 gezeigt wird. Der Ersatz des Ellipsoid-Reflektors 42 durch den sphärischen Spiegel 42' ist wegen der niedrigeren Kosten interessant.

Der Lichtmodulator 20 ist in Fig. 1 symbolisch dargestellt. Es kann sich dabei entweder um eine Vorrichtung zur periodischen Veränderung der elektrischen Leistung am Glühkörper im Ellipsoid-Brennpunkt 11 (Fig. 4) handeln (thermische Modulation), oder um eine rotierende Sektorscheibe 21 (sog. Chopper), die, wie in Fig. 10 eingezeichnet, im Strahlengang zwischen Lichtquelle 11 und der Zelle 41 angeordnet ist (mechanische Modulation).

Die selektive Gasdetektion mit optisch-spektroskopischer Methode bedingt die Verwendung von monochromatischem Licht. Falls als Lichtquelle ein Glühkörper eingesetzt wird, der naturgemäss in einem breiten Spektralbereich Licht ermittelt, ist ein Monochromator 30 (Fig. 1) erforderlich. Für unsere Zwecke am besten geeignet ist ein Schmalband-Interferenzfilter. Daneben ist es aber auch denkbar, eine mit einem geeigneten Gas gefüllte verschlossene Küvette zu verwenden, die, bedingt durch die spezifischen Absorptions-Banden des Gases (vornehmlich im Infrarot-Spektralbereich) in gewissen Spektralbereichen nicht transparent ist.

In Fig. 11 ist die Kombination eines mechanischen Lichtmodulators mit einem Monochromator dargestellt. Auf der rotierenden Scheibe 32 ist mindestens ein Interferenzfilter 33 oder mindestens eine Gasküvette 34 angeordnet. Werden verschiedene Interferenzfilter 33, 33', 33'' usw. verwendet, bzw. Küvetten 34, 34', 34'' usw. mit verschiedenen Gasfüllungen, oder Kombinationen von Interferenzfiltern und Gasküvetten, so wird es möglich, gleichzeitig mehrere Komponenten einer Gasmischung getrennt zu erfassen (darauf wird später näher eingegangen).

Statt runde Interferenzfilter bzw. Gasküvetten zu verwenden, wie das in der Darstellung in Fig. 11 angegeben wurde, ist es denkbar, dass sektorförmig ausgebildete und zusammengefügt angeordnete Filterelemente zum Einsatz gelangen.

Die spektroskopische Detektion von Gasen bedingt, dass das die zu bestimmende Komponente enthaltende Gas – im folgenden Messgas genannt – in den Strahlengang zwischen Lichtquelle und Detektor gebracht wird. Grundsätzlich kann dieses Messgas an drei verschiedenen Stellen in den Strahlengang gebracht werden, nämlich in der Lichtquellenvorrichtung 10 von Fig. 1 selbst, zwischen Lichtquellenvorrichtung 10 und dem Detektor 40, oder schliesslich in den Detektor 40. Im folgenden soll auf diese drei verschiedenen Fälle näher eingegangen werden.

Im ersten Fall ist das Messgas in die Lichtquellenvorrichtung 10, also in den Ellipsoidreflektor 14, eingefüllt. Es sei in diesem Zusammenhang auf die Schweizer Patentanmeldung Nr. 6 901/81-3 vom 29. Oktober 1981 hingewiesen.

Die Bestimmung des Gaskonzentration beruht auf einer Extinktionsmessung, d.h. der Bestimmung der Abschwächung der Lichtintensität von der Wellenlänge des Absorptionsbereiches des Messgases im Strahlengang. In diesem Fall hat der Reflektor einerseits die Bedeutung eines Lichtkondensors, der das Licht gebündelt den Detektoren zuführt, andererseits einer Mehrfach-Reflexionszelle. Die Zelle 41 bei 15 muss dem Absorptionsspektrum des Messgases im Reflektor 14 angepasst sein. Dies kann entweder durch eine photo-akustische Zelle 41 erreicht werden, die Gas der zu bestimmenden Art enthält, oder aber durch Verwendung einer Kombination eines optischen Schmalbandfilters 31 mit einem Breitband-Detektor 43, wie das in Fig. 12 dargestellt ist. Da die Gaskonzentrationsmessung, wie erwähnt, aus der Abschwächung der Lichtintensität ermittelt wird, ist eine Messung des durch das Messgas unabgeschwächten Lichtstrahles, d.h. eine sog. Referenzmessung, unbedingt erforderlich. Eine solche Referenzmessung kann beispielsweise bewerkstelligt werden, indem die Lichtintensität vor Eintritt in die Absorptionszelle bestimmt wird, ein Verfahren, das in unserem Fall natürlich nicht angewendet werden kann, oder aber indem eine Lichtintensitätsmessung ausserhalb des spektralen Absorptionsgebietes des Messgases durchgeführt wird. Eine solche Referenzmessung kann entweder mit Hilfe einer spektral selektiv arbeitenden photo-akustischen Zelle 41' in Fig. 13 oder aber mit einem Breitbanddetektor 43' mit gegebenenfalls eingefügtem Schmalbandfilter 31' gemäss Fig. 12 vorgenommen werden. Natürlich dürfen sich die Absorptionsbereiche des Messgases und der Empfindlichkeitsbereich des Referenzsignaldetektors 41' bzw. 43' keinesfalls überlappen.

Es ist allerdings vorteilhaft, wenn die beiden Detektor-Zellen in ähnlichen Spektralbereichen betrieben werden. Auf diese Weise kann dem beispielsweise verschmutzungsbedingten spektralen Verhalten des Reflexionsvermögens des Reflektors 14 Rechnung getragen werden.

Dies kann durch die Wahl des spektralen Durchlassbereiches des Filters 31' ermöglicht werden, oder durch Einfüllen eines geeigneten Gases in die photo-akustische Zelle 41', das im Messgas nicht vorkommt und mit demselben keine überlappenden Spektralbanden besitzt.

Die wohl am häufigsten verwendete Methode zur Messung des spektralen Absorptionsvermögens besteht im Anordnen des Messgases im Strahlengang zwischen der Lichtquellen-Vorrichtung 10 und der Mess-Detektorzelle 40, wie sie als zweiter Fall charakterisiert worden ist.

Auf eine spezielle Anordnung dieser Art, nämlich die nicht dispersive Gasanalyse soll hier näher eingegangen werden.

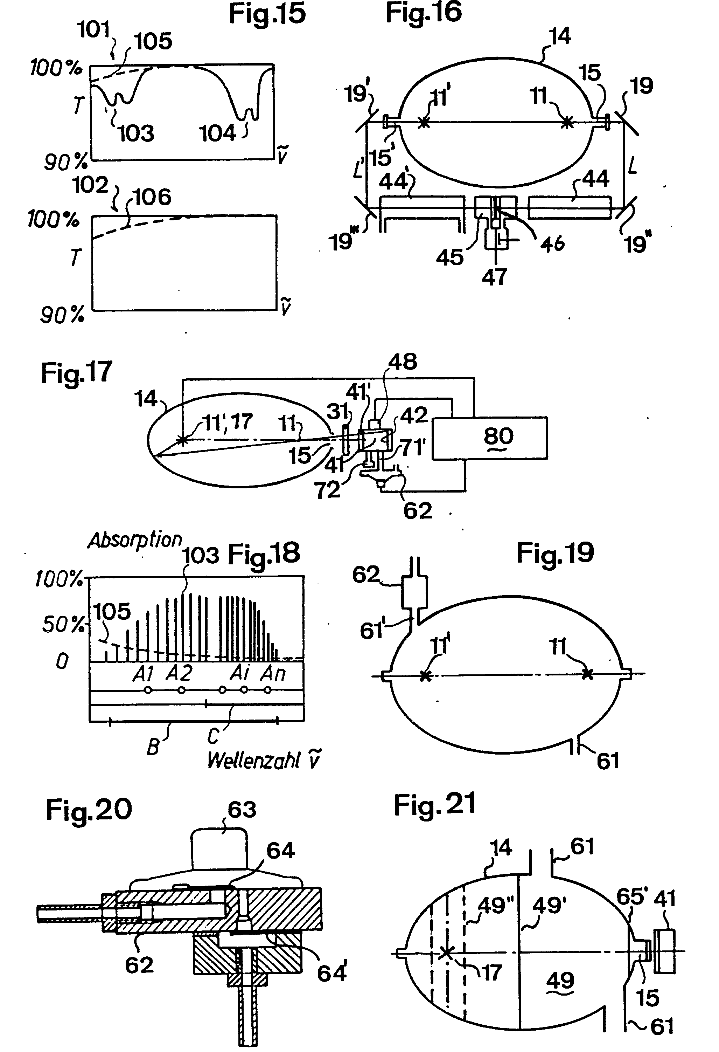

Der Aufbau eines solchen bekannten Gasanalysators ist in Fig. 14 in vereinfachter Form abgebildet. 11 stellt die nicht monochromatische Strahlungsquelle dar. Das Licht wird durch die Reflektoranordnung 19 in zwei Teilstrahlen aufgespalten, die ihrerseits die Messgasküvette 44 und die Referenzküvette 44' durchdringen. Die photo-akustische Zelle setzt sich aus den mit Gas der zu untersuchenden Komponente gefüllten Kammer 45, dem Lichtabsorber 46, der sämtliche, die Kammern 44, 44' durchdringende Strahlung absorbiert, und der Druckdifferenzmesszelle 47 zusammen, in der sich das Mikrophondiaphragma befindet. Die Funktionsweise des Systems ist die folgende: aus dem kontinuierlichen Spektrum der Lichtquelle 11 werde in der Probegaskammer 44 ein kleiner Anteil durch die zu untersuchende Komponente mit Spektrum 103 absorbiert (Fig. 15). Das transmittierte Licht ist damit im besagten Gebiet leicht reduziert, wie das in Kurve 101 von Fig. 15 dargestellt ist. Die Störung 105 durch die Gaskomponente mit überlappendem Spektrum ist dabei ebenfalls berücksichtigt, ebenso das Spektrum 104 einer anderen Gaskomponente im Probegas, beispielsweise Kohlendioxid. Die Transmission der Referenzküvette, die beispielsweise Gas der Störkomponente mit Spektrum 106 enthält, ist in 102 veranschaulicht. Da die akustische Zelle mit Gas der zu untersuchenden Komponente gefüllt ist – also etwa mit Kohlenmonoxid – wird nur Licht im Bereich des Spektrums 103 im Kammersystem absorbiert. Wegen der hier angewendeten Differenzmessmethode wird somit das Transmissionsspektrum 101 im Bereich 103 mit dem entsprechenden Gebiet von 102 verglichen. Gaskomponenten mit einem Spektrum 104, das mit demjenigen von 103 nicht überlappt, kann somit zu keinem Mikrophonsignal Anlass geben. Es ist allerdings zu bemerken, dass dies beim erwähnten System Kohlenmonoxid und Kohlendioxid nicht vollständig der Fall ist. Findet eine teilweise Überlappung der Spektren statt, wie beispielsweise beim Störspektrum 105 mit dem Spektrum 103, so ist eine Teilkompensation durch das Referenzgas mit Spektrum 106 wohl möglich, eine sog. Querbeeinflussung ist aber nicht ganz zu vermeiden.

Eine nicht dispersiv arbeitende photo-akustische Vorrichtung lässt sich mit Hilfe des Ellipsoid-Reflektors realisieren, wie das anhand der Darstellung von Fig. 16 gezeigt wird. Bei den Brennpunkten 11 und 11' befinden sich die Glühkörper. Das Licht wird längs der grossen Hauptachse des Rotationsellipsoids 14 durch die Öffnungen 15 und 15' ausgekoppelt. An den Spiegeln 19, 19' und 19'', 19''' werden die Lichtbündel umgelenkt und den Küvetten 44 und 44' zugeleitet. In der Küvette 44 befindet sich das zu untersuchende Messgas, während die Küvette 44' beispielsweise ein Referenzgas enthält.

Die photo-akustische Zelle, welche mit Gas der zu untersuchenden Komponente gefüllt ist, setzt sich aus dem Absorptionsteil 45 und dem Detektionsteil 47 zusammen. Die äusseren Kammern von 45 sind mit dem Detektionsteil 47 verbunden. Die licht-absorptionsbedingte Druckdifferenz zwischen diesen äussern Kammern von 45 wird durch das Mikrophondiaphragma in Zelle 47 detektiert. Im Mittelteil von 45 befindet sich ein Absorber 46, der das die beiden äusseren Kammern durchdringende Infrarotlicht vollständig absorbiert.

Der Abgleich der Lichtintensität an den Öffnungen 15 und 15' kann durch Variation der Leuchtstärke der Quellen 11 und 11' erhalten werden. Gegebenenfalls ist ein automatischer Abgleich, beispielsweise mittels Infrarot-Photodetektoren, möglich, die bei den teildurchlässigen Spiegeln 19 und 19' angeordnet sind.

Es soll nur der dritte Fall, nämlich die Messgasanordnung im Strahlengang besprochen werden.

Eine Realisierung der messgasgefüllten Detektorzelle 40 basiert auf dem bereits besprochenen photoakustischen Effekt. In Fig. 17 ist der erfindungsgemässe Aufbau des Gasdetektionssystems dargestellt. Es sei in diesem Zusammenhang auf die Schweizer Patentanmeldung Nr. 2 058/81-9 vom 26. März 1981 hingewiesen. Die Strahlung des beispielsweise thermisch modulierten Glühkörpers 11 wird mittels des geschlossenen Ellipsoid-Reflektor 14 mit Lichtauskopplung längs der grossen Hauptachse, gesammelt und unter kleinem Öffnungswinkel des Lichtkegels einem Schmalbandfilter 31 zugeführt. Der Durchlassbereich des Filters ist dem Absorptionsspektrum der zu detektierenden Gaskomponente angepasst, wie das in Fig. 18 mit dem Bereich B für ein Gas mit Absorptionsspektrum 103 veranschaulicht wird. Es sei darauf hingewiesen, dass im Gegensatz zur Laseranwendung, wo die Lichtquelle auf eine einzige Rotationslinie beispielsweise Ai abgestimmt ist, hier – bedingt durch die Bandbreite des Filters – die ganze Rotationsstruktur erfasst wird. Das wirkt sich günstig auf die absorbierbare Lichtmenge der ohnehin lichtschwachen Quelle aus. Bei Gasen, die in mehreren Spektralbereichen Infrarot-Strahlung absorbieren, ist derjenige Bereich auszuwählen, wo einerseits die Absorption möglichst gross ist, andererseits die Überlappung mit Absorptionsspektren anderer möglichen Gaskomponenten, wie das etwa mit dem Spektrum 105 in Fig. 18 dargestellt ist, möglichst wenig ins Gewicht fällt. Eventuell ist es aus obigem Grunde angezeigt, das Filter nur auf einen Teilbereich C der Vibrations-Rotationsstruktur abzustimmen. Eine Feinadjustierung des Durchlassbereiches kann im Fall dass ein Interferenzfilter 33 verwendet wird, allenfalls durch Schiefstellen desselben im Strahlengang vorgenommen werden. Die Störung der Messung durch andere Gaskomponenten lässt sich aber beispielsweise auch weitgehend eliminieren, indem statt eines einzigen mehr als ein Schmalbandfilter verwendet werden, die den Maxima bzw. den Flanken von Messgas bzw. den Störkomponenten angepasst sind. Die effektive Gaskonzentration, bzw. die Konzentrationen verschiedener Komponenten lassen sich dann aus den Messungen, die mit den verschiedenen eingesetzten Schmalbandfiltern 31 durchgeführt worden sind, vorteilhaft numerisch ermitteln, analog wie das P. Perlmutter, S. Shtrikman und M. Slatkine in Applied Optics, Vol. 13, Seite 2267 (1979) für ein Gerät mit Laser-Lichtquelle ausführlich beschrieben haben. Die Schmalbandfilter können beispielsweise nacheinander in den Strahlengang geschoben werden. Einfach lässt sich das realisieren, indem sie, wie Fig. 11 zeigt, auf einer drehbaren Scheibe angeordnet sind. Wie bereits erwähnt, kann diese Vorrichtung gleichzeitig zur Lichtmodulation verwendet werden. Es besteht aber auch die Möglichkeit, mehrere filtrierte Lichtbündel auf dieselbe photo-akustische Zelle 41 zu leiten, oder aber mehrere photo-akustische Systeme, bestehend aus Quelle 11, Optik 13, Filter 31 und Zelle 41 zu verwenden, wobei bei jedem System das Filter einer anderen Gaskomponente angepasst ist. Bei der photo-akustischen Zelle selbst handelt es sich um einen kleinen, weitgehend geschlossenen Hohlraum. Das Mikrophon 48 ist seitlich angebracht. Auf der dem Lichteintrittsfenster 41' gegenüberliegenden Seite befindet sich ein Reflektor 42, der eben ausgebildet, aber gegebenenfalls auch gekrümmt sein kann, wie das bereits erwähnt worden ist. Es ist nicht vorgesehen, die Zelle in akustischer Resonanz zu betreiben; vor allem im Hinblick darauf, bei niedriger Lichtmodulationsfrequenz zu arbeiten.

Besondere Wichtigkeit muss der Messgasumwälzung beigemessen werden. Die entsprechenden Vorrichtungen sind in Fig. 1 mit den Blöcken 60 und 70 charakterisiert. Die Gasaustauschvorrichtung bezieht sich auf die messgasgefüllte Lichtquellenvorrichtung 10, während 70 die entsprechende Einheit darstellt für das Messgas in der Detektorzelle 40.

Im ersten Fall der messgasgefüllten Lichtquellenvorrichtung 10 ergeben sich zwei Probleme; einerseits erschwert die Ellipsoidform einen effizienten Gasaustausch, andererseits muss verhindert werden, dass Gasströmungsfluktationen die Temperatur und somit die Strahlungsintensität der Glühkörper-Lichtquelle 11 wesentlich ändern. (Da Glas im Kohlendioxid-Absorptionsbereich nicht transparent ist und sich andere Materialien nur beschränkt eignen, kann der Glühkörper kaum in einem Kolben abgekapselt angeordnet sein).

Eine gleichmässige forcierte Gasumwälzung, wie sie in Fig. 19 dargestellt ist, ist daher angezeigt. Es sind im Ellipsoid zwei zusätzliche Öffnungen 61 und 61' samt einer Gasfördervorrichtung 62 angebracht. Diese gleichmässige, effiziente Gasumwälzung kann beispielsweise mittels einer kleinen Membranpumpe erreicht werden.

Eine mögliche Konstruktion einer Gasfördereinrichtung 62, die sich für die Luftumwälzung eignen könnte, ist beispielsweise in Fig. 20 dargestellt. Es handelt sich um eine Fördereinrichtung, die unter Verwendung eines Kleinlautsprechers 63 mit Kunststoffmembrane von 3 cm Durchmesser realisiert worden ist. Mit 64 ist das Einlass- und mit 64' das Auslassventil – dünne Gummimembranen – bezeichnet. Bei einer Betriebsfrequenz von 50 Hz konnte beispielsweise gegen einen Überdruck von 5 mbar eine Luftmenge von 0.7 cm³/sec gefördert werden. Die Lautsprechermembrane ist gegen Gasadsorption und somit gegen Verfälschungen der Gaszusammensetzung weitgehend passiviert, indem sie mit Aluminium durch Aufdampfen beschichtet worden ist. Ein Exemplar einer solchen Pumpe arbeitet seit längerem ununterbrochen und störungsfrei. Eine noch bessere Unterdrückung von Strömungsfunktionen, wie sie beispielsweise erforderlich ist, wenn die Lichtquelle 11 thermisch moduliert werden soll und somit eine kleine thermische Trägheit aufweisen muss, kann erreicht werden, wenn der Teilraum des Ellipsoids, in dem sich der Glühkörper 11 befindet, durch mindestens eine dünne, für die betreffende Strahlungswellenlänge transparente Membrane 49' bzw. ein dünnwandiges Rohr 49'' vom übrigen Reflektorraum abgetrennt wird, wie das in Fig. 21 dargestellt ist.

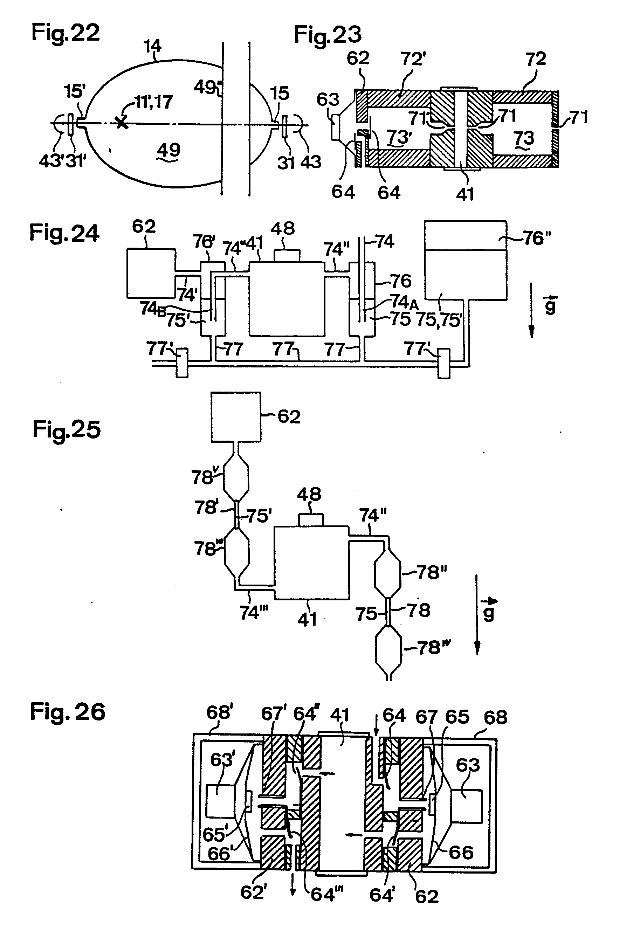

Ein besonderes Problem stellt sich, wenn das Messgas Verunreinigungen enthält, die sich auf der Reflektorfläche leicht in Form von Schmutz oder Kondensat (z.B. Wasser) ablagern können und somit deren Reflexionsvermögen beeinträchtigen. In diesem Falle ist es angezeigt, das Messgas durch ein dünnwandiges, für die betreffende Strahlung transparentes Rohr 49'' zu führen, dessen Achse vornehmlich in den lichtquellenfreien Brennpunkt fällt. In Fig. 22 ist eine solche Konstruktion dargestellt.

Im Fall des nicht dispersiven photoakustischen Gasanalysators, wie er in Fig. 14 und 16 abgebildet ist, ist der Gasaustausch in der Messgasküvette 44 unproblematisch. Eventuell ist eine Gasvorreinigung notwendig. Zur Gasumwälzung dürfte sich beispielsweise eine Fördereinrichtung eignen, wie sie in Fig. 20 abgebildet ist.

Schwieriger ist die Situation im Falle des messgasgefüllten photoakustischen Detektors 41.

Nebst der Aufgabe des effizienten Gasaustauschers fällt dann der Vorrichtung 70 noch die Aufgabe der akustischen Absperrung zu.

Während der Messung muss nämlich einerseits verhindert werden, dass sich das lichtabsorptionsbedingte Schallsignal durch Entweichen von Gas aus der photoakustischen Zelle abschwächt, andererseits muss das Eindringen von externem Raumschall, der den Rauschpegel der Messung heraufsetzen könnte, verhindert werden.

Da ein effizienter Gasaustausch in jedem Fall mit Druckfluktuationen verbunden ist, kann während dieser Zeit nicht gemessen werden. Im Gegensatz zu den Fällen der messgasgefüllten Lichtquellenvorrichtung 10 oder zur nicht dispersiven Gasdetektion von Fig. 14 und 16 muss nun im alternierenden Betrieb mit Hilfe der Vorrichtung 70 Messgas ausgetauscht, resp. die Messdetektorzelle während der Messung akustisch möglichst verschlossen gehalten werden.

Vier verschiedene Lösungsmöglichkeiten wurden in Erwägung gezogen, auf die im folgenden näher eingegangen werden soll.

Zunächst besteht die Möglichkeit, den Gasaustausch durch ständig offengehaltene Kapillaren 71' in der Detektorzellen-Wandung zu vollziehen, die derart dünn gehalten werden müssen, dass die akustische Entkoppelung während der Messphase gewährleistet ist. Es sei in diesem Zusammenhang auf die Darstellung von Fig. 17 hingewiesen. Es hat sich gezeigt, dass Kapillaren mit einem Durchmesser um 0,1 mm und einer Länge von 0,5 mm wohl das photoakustisch erzeugte Schallsignal genügend dämmen, dass aber zur Vermeidung der Einkoppelung von externen Schall eine zusätzliche Schalldämpfeinrichtung 72 notwendig ist. In Fig. 23 ist eine solche Konstruktion dargestellt, wobei der Schalldämpfer mittels Volumina 73 und weitere Kapillaren 71 realisiert ist. Die dünnen Kapillaren 71 einerseits und die zusätzlichen Volumina 73 erlauben allerdings keinen raschen Gasaustausch. Jedenfalls ist das Kompressionsverhältnis der besprochenen Gasfördervorrichtung 62 von Fig. 20 nicht hinreichend, um dieser Forderung nachzukommen. Es ist eine stärkere Pumpe 62 notwendig.

Zwei weitere Möglichkeiten der akustischen Entkopplung sind in der Schweizer Patentanmeldung Nr. 4 853/81-8 vom 24. Juli 1981 beschrieben. Sie beruhen auf einer hydrodynamischen akustischen Abkoppelung.

Fig. 24 zeigt eine der Realisationsmöglichkeiten: die Pumpenvorrichtung 62 zieht das Gas ausserhalb des Systems über die Zuleitung 74 und ein Tauchrohr 74A durch das flüssige Medium 75 in den Behälter 76, von wo aus es über die Verbindung 74'' in die photo-akustische Zelle 41 gelangt. Das aus der photo-akustischen Zelle 41 verdrängte Gas gelangt über die Verbindung 74''' und ein zweites Tauchrohr 74B durch das flüssige Medium 75' in den Behälter 76', von wo es über die Leitung 74' abgepumpt wird.

Ist die Pumpvorrichtung 62 ausser Betrieb, so ist die photo-akustische Zelle wegen der flüssigen Medien 75 und 75' von der Aussenwelt weitgehend abgekoppelt, d.h. das photo-akustische Signal wird kaum abgeschwächt und das Eindringen von akustischen Störsignalen ist weitgehend verhindert. Die akustische Entkopplung der photoakustischen Zelle beruht auf der Tatsache, dass Luft und flüssige Medien sehr unterschiedliche Schallhärten (h = $\sqrt{E \cdot p}$

E: Elastizitätsmodul, p: Dichte) besitzen und demzufolge die akustische Leistungsanpassung an den Gas-Flüssigkeits- und Flüssigkeits-Gas-Schnittstellen sehr schlecht ist. Im menschlichen Ohr beispielsweise, wo dieses Problem bei der Schallübertragung vom äusseren Ohr auf die Gehörflüssigkeit des Innenohrs auch auftritt, wird eine gute Leistungsanpassung durch die Gehörknöchelchen im Mittelohr gewährleistet. Der unterschiedlichen Schallhärte von Luft und Gehörflüssigkeit wird mit einer mechanischen Übersetzung (Übersetzungsverhältnis 60 : 1) Rechnung getragen.

Beim Betrieb der Pumpvorrichtung 62 entstehen wegen dem durch die flüssigen Medien 75 und 75′ nur stossweise strömenden Gas in der photoakustischen Zelle 41 charakteristisch modulierte Druckschwankungen, die mit dem Mikrophon 48 registriert werden. Das so entstehende Mikrophonsignal gestattet es, die Funktion des Durchflusssystems zu überprüfen.

Die flüssigen Medien 75 und 75′ wirken gleichzeitig als Gasfilter; sie ermöglichen es, das Gas vor seinem Eintritt in die photo-akustische Zelle 41 zu waschen. Durch geeignete Wahl der Medien 75 und 75′ können dem zu messenden Gas auch gewisse, die Messung beeinträchtigende Komponenten entzogen werden (z.B. $H_2O$). Zu diesem Zwecke ist es auch denkbar, über die Zuleitung 74 und Leitung 74′ die Behälter 76 und 76′ mit weiteren, zu 76 und 76′ analogen Behältern und sonstigen Gasaufbereitungsanlagen zu verbinden. Die Medien 75 und 75′ können auch, so es sich um eine zusätzliche Gasvorreinigung handelt, durch feste Stoffe ersetzt werden.

Um zu verhindern, dass die flüssigen Medien 75 und 75′ ins Innere der optoakustischen Zelle eindringen, ist die Vorrichtung, wie in Fig. 24 gezeigt, bezüglich der Schwerkraft richtig zu lagern.

Befindet sich die Vorrichtung in einem Bezugssystem mit zeitlich variablem Richtungsvektor der Gravitation $\vec{g}$, so wird sie beispielsweise durch kardanisch wirkende Mittel gelagert. Mit dieser Massnahme können in begrenztem Ausmass Lageabweichungen ausgeglichen werden, wobei die genannten Grenzen durch die nötigen Anschlüsse gesetzt sind. Statt die Pumpvorrichtung 62, wie in Fig. 24 gezeigt, bei 74′ anzuschliessen, ist es möglich, diese auch bei 74 anzubringen.

Fig. 24 zeigt ferner eine zusätzliche Massnahme, mit der es möglich ist, die Behälter 76 und 76′, beispielsweise unterhalb der flüssigen Medien 75 und 75′ über Zuleitungen 77 mit einem oder mehreren Behältern 76′′ zu verbinden, in denen Reserven der Medien 75 und 75′ lagern, so dass das Auswechseln dieser Medien in 76 und 76′ nach einer gewissen Zeit automatisch, beispielsweise mit den Ventilen 77′, möglich ist. Diese Methode ist vor allem bei Verwendung mehrerer Messzellen anzuwenden.

In Fig. 25 ist eine weitere Ausführungsform der Erfindung dargestellt. In den Kapillaren 78 und 78′ befinden sich die flüssigen medien 75 und 75′. Die Durchmesser der Kapillaren 78 und 78′ sind so bemessen, dass bei Druckgleichheit im Expansionsbehälter 78′′ bzw. 78′′′ und im Ausgangsstutzen 78$^{IV}$ bzw. 78$^{V}$ die Kapillarkräfte ein Ausfliessen des flüssigen Mediums 75 im Bereich der Betriebstemperaturen verhindern.

Die Pumpvorrichtung 62 erzeugt im Ausgangsstutzen 78$^{V}$ einen derartigen Druckabfall, dass das flüssige Medium 75 aus der Kapillare 78 in den Expansionsbehälter 78′′ entweicht und das Gas im Ausgangsstutzen 78$^{IV}$ über ide Kapillare 78 in den Expansionsbehälter 78′′ und über die Zuleitung 74′′ in die photo-akustische Zelle 41 gelangt.

Das aus der photo-akustischen Zelle 41 verdrängte Gas gelangt über die Zuleitung 74′′′ in den Expansionsbehälter 78′′′, wo es das in der Kapillare 78′ befindliche Medium 75′ in den Ausgangsstutzen 78$^{V}$ drückt und abgepumpt wird.

Wird die Pumpvorrichtung 62 ausgeschaltet, so fliesst das sich nun im Expansionsbehälter 78′′ respektive im Ausgangsstutzen 78$^{V}$ befindliche flüssige Medium 75 respektive 75′ in die Kapillaren 78 respektive 78′ zurück und koppelt dadurch die photoakustische Zelle 41 von äusseren Raumschallquellen ab und gewährleistet gleichzeitig die Verdämmung des photoakustischen Drucksignals in der Zelle. Statt die Pumpenvorrichtung 62 am Ausgangsstutzen 78$^{V}$ anzubringen, kann man sie auch am Stutzen 78$^{IV}$ befestigen.

Um das Eindringen der Medien 75 und 75′ in die Zelle 41 zu verhindern und den Rückfluss in die entsprechenden Kapillaren zu gewährleisten, ist bei der hier beschriebenen Anordnung die Zelle nur während der Gasaustauschphase, wie in Fig. 25 gezeigt, in Bezug auf die Schwerkraft richtig zu lagern. Ausserhalb der Gasaustauschphasen, beispielsweise bei Transport, Messung etc., spielt die Lagerung, wegen der in diesen Zwischenphasen wirkenden Kapillarkräfte keine Rolle, da sie das Ausfliessen der Medien 75 und 75′ verhindern.

Auch bei dieser Anordnung kann die Funktion der Durchflussvorrichtung während des Gasaustausches, wegen der dadurch entstehenden charakteristisch modulierten Druckschwankungen in der photo-akustischen Zelle 41, mit dem Mikrophon 48 überprüft werden.

Eine vierte Konstruktion einer Gasaustausch-Absperrvorrichtung ist in Fig. 26 dargestellt. Es handelt sich um eine Kombination einer Gasfördereinrichtung, wie sie in der Darstellung von Fig. 20 wiedergegeben ist, und einem Plattenventil.

Während der Gasaustauschphase sind beide Gasfördervorrichtungen 62 und 62′ im Förderbetrieb, d.h. die Lautsprechermembranen 66, 66′ mit den Ventilplatten 65 und 65′ sind in Vibrationszustand versetzt.

Während der Messphase sind die beiden Lautsprechermembranen 66, 66′ derart angesteuert, dass die Ventilplatten 65, 65′ gegen die Ventilsitze 67, 67′ gepresst werden. Die Hauben 68, 68′ vermindern eine Übertragung von Raumschall über die Lautsprechermembranen.

## Patentansprüche

1. Optische Detektionsvorrichtung für den selektiven Nachweis von Gasen, mit einer Lichtquelle (10), einer das ausgestrahlte Licht modulierenden Vorrichtung (20), einem Monochromator (30), der zwischen Lichtquelle (10) und Detektor (40) angeordnet ist, und Signalverarbeitungsmitteln (80), die zur Analyse der Signale des Detektors (40) mit letzterem verbunden sind und einer Gassammelzelle dadurch gekennzeichnet,

dass die Lichtquelle (10) aus einem Strahler (17) und einem rotationsellipsoid-förmigen, die beiden Brennpunkte (11, 11') umschliessenden Reflektor (14) besteht, wobei der Strahler als Wendel ausgebildet im einen der beiden Brennpunkte (11, 11') angeordnet und partiell transparent für die am rotationsellipsoid-förmigen Reflektor zurückgeworfenen Strahlen ist, dass mindestens einer der beiden Durchstosspunkte der grossen Hauptachse des rotationselliptischen Reflektors (14) zur Entnahme eines parallel scharf gebündelten Lichtstrahls zu einer Öffnung (15, 15') erweitert ist, und

dass die Gassammelzelle (49) im Lichtstrahl im Inneren der Lichtquelle (10) angeordnet ist.

2. Detektionsvorrichtung nach Anspruch 1, dadurch gekennzeichnet, dass die Gassammelzelle (49), die sich in der Umgebung von einem der beiden Brennpunkte (11, 11') befindet, im Reflektor (14) so angeordnet ist, dass sie vom Strahler (17) gasdicht abgetrennt ist.

3. Optische Detektionsvorrichtung gemäss Oberbegriff von Anspruch 1, dadurch gekennzeichnet,

dass die Lichtquelle (10) aus einem Strahler (17) und einem rotationsellipsoid-förmigen, die beiden Brennpunkte (11, 11') umschliessenden Reflektor (14) besteht, wobei der Strahler als Wendel ausgebildet, im einen der beiden Brennpunkte (11, 11') angeordnet und partiell transparent für die am rotations-ellipsoidförmigen Reflektor zurückgeworfenen Strahlen ist, dass mindestens einer der beiden Durchstosspunkte der grossen Hauptachse des rotations-elliptischen Reflektors (14) zur Entnahme eines parallel scharf gebündelten Lichtstrahls zu einer Öffnung (15, 15') erweitert ist, und

dass der Detektor (40) die Gassammelzelle (41) enthält und mittels des Lichtes in der Gassammelzelle (41) Signale erzeugt, die für das Gas in der Gassammelzelle (41) charakteristisch sind.

4. Detektionsvorrichtung nach Anspruch 3, dadurch gekennzeichnet, dass an die Gassammelzelle (41) ein Mikrophon (48) zur Aufnahme des photoakustischen Effektes in der Nähe des in die Gassammelzelle (41) eintretenden Lichtstrahls angeordnet ist.

5. Detektionsvorrichtung nach Anspruch 4, dadurch gekennzeichnet, dass eine Kapillare (71') einer Gasaustauschvorrichtung (70) mit einem Ende in die Gassammelzelle (41) mündet und am anderen Ende der Gasfördervorrichtung (62) angeschlossen ist.

6. Detektionsvorrichtung nach Anspruch 5, dadurch gekennzeichnet, dass mindestens eine Kapillare (71, 71') mit einem Ende in die Gassammelzelle (41) mündet und mit dem anderen Ende den Messgaseinlass bzw. -auslass bildet.

7. Detektionsvorrichtung nach Anspruch 5, dadurch gekennzeichnet, dass die Gasaustauschvorrichtung (70) eine Membranpumpe (62) enthält.

8. Detektionsvorrichtung nach Anspruch 5, dadurch gekennzeichnet, dass die Gasaustauschvorrichtung (70) aus einer oder zwei Membranpumpen (62, 62') mit in der Membrane (66, 66') angeordneten Ventilplatten (65, 65') und diesen zugeordneten Ventilsitzen (67, 67') gebildet ist, wobei die Pumpenmembranen (66, 66') wahlweise mit Hauben (68, 68') abgedeckt sind.

9. Detektionsvorrichtung nach Anspruch 1 oder 3, dadurch gekennzeichnet, dass die modulierende Vorrichtung (20) aus einer rotierbaren, im Strahlengang des durch die Lichtaustrittsöffnungen (15, 15') austretenden Lichtes angeordneten Scheibe (21, 32) besteht, welche Öffnungen mit Bandpassfiltern (31, 33, 33', 33'') und/oder gasgefüllten Küvetten (34) aufweist.

10. Detektionsvorrichtung nach Anspruch 1 oder 3, dadurch gekennzeichnet, dass auf der die Lichtaustrittsöffnung (15, 15') durchstossenden und verlängerten Hauptachse ein Hohlspiegel (42, 42') derart im Abstand zum rotationselliptischen Reflektor (14) angeordnet ist, dass mindestens ein Brennpunkt der reflektierenden Kalotte (42, 42') mit einem der Brennpunkte (11, 11') des Reflektors zusammenfällt.

11. Verwendung der Vorrichtung nach Anspruch 4 zur Kontrolle der Funktionsweise der Gasaustauschvorrichtung (70), wozu vom Mikrophon (48) in der Gassammelzelle (41) sowohl ein photoakustisches Mess-Signal als auch beim Gasaustausch entstehende, charakteristische Druckschwankungen aufgefangen und daraus elektrische Signale durch die Signaverarbeitungsmittel (80) abgeleitet werden.

**Claims**

1. Optical detection apparatus for the selective detection of gases, with a light source (10), a device (20) modulating the emitted light, a monochromator (30) arranged between the light source (10) and the detector (40), and signal processing means (80) which, for analyzing the signals of detector (40), are connected to the latter, and a gas collecting cell, characterized in that the light source (10) comprises an emitter (17) and a spheroidal reflector (14) surrounding the two foci (11, 11'), the emitter being constructed as a coil and arranged in one of the two foci (11, 11'), being partially transparent for the rays reflected back on the spheroidal reflector, that at least one of the two intersection points of the large principal axis of the spheroidal reflector (14) being widened to an opening (15, 15') for extracting a parallel, sharply focussed light beam and that the gas collecting cell (49) is arranged in the light beam in the interior of the light source (10).

2. Detection apparatus according to claim 1, characterized in that the gas collecting cell (49) located in the vicinity of one of the two foci (11, 11') is so arranged in reflector (14) that it is separated in gas tight manner from emitter (17).

3. Optical detection apparatus according to the preamble of claim 1, characterized in that the light source (10) comprises an emitter (17) and an ellipsoidal reflector (14) surrounding the two foci (11, 11'), the emitter being constructed as a coil, arranged in one of the two foci (11, 11') and being partly transparent for the rays reflected back on the spheroidal reflector, that at least one of the two intersection points of the large principal axis of the spheroidal reflector (14) is widened to an opening (15, 15') for extracting a parallel, sharply focussed light beam and the detector (40) contains the gas collecting cell (41) and by means of the light in said cell (41) produces signals, which are characteristic of the gas in the gas collecting cell (41).

4. Detection apparatus according to claim 3, characterized in that at the gas collecting cell (41) is arranged a microphone (48) for recording the photoacoustic effect in the vicinity of the light beam entering the gas collecting cell (41).

5. Detection apparatus according to claim 4, characterized in that a capillary tube (71') of a gas exchange device (70) issues by one end into the gas collecting cell (41) and at the other end is connected to the gas feed device (62).

6. Detection apparatus according to claim 5, characterized in that at least one capillary tube (71, 71') issues with one end into the gas collecting cell (41) and with the other end forms the measuring gas inlet or outlet.

7. Detection apparatus according to claim 5, characterized in that the gas exchange device (70) contains a diaphragm pump (62).

8. Detection apparatus according to claim 5, characterized in that the gas exchange device (70) is formed by one or two diaphragm pumps (62, 62') with valve plates (65, 65') arranged in the diaphragm (66, 66') and valve seats (67, 67') associated therewith, the pump diaphragms (66, 66') being optionally covered by hoods (68, 68').

9. Detection apparatus according to claims 1 or 3, characterized in that the modulation device (20) comprises a rotatable disk (21, 32) located in the optical path of the light passing out of the light exit ports (15, 15'), which are provided with band pass filters (31, 33, 33', 33'') and/or gasfilled cells (34).

10. Detection apparatus according to claims 1 or 3, characterized in that a concave mirror (42, 42') is arranged in spaced manner with respect to the spheroidal reflector (14) on the extended major axis passing through the light exit port (15, 15') in such a way that at least one focus of the reflecting mirror (42, 42') coincides with one of the foci (11, 11') of the reflector.

11. Use of the apparatus according to claim 4 for checking the operation of the gas exchange device (70), for which purpose the microphone (48) in the gas collecting cell (41) derives both a photoacoustic measurement signal and characteristic pressure fluctuations caused during the gas exchange and from these are derived electrical signals through the signal processing means (80).

**Revendications**

1. Dispositif de détection optique pour la présence sélective de gaz, dispositif comportant une source lumineuse (10), un dispositif (20) de modulation de la lumière émise, un monochromateur (30) placé entre la source lumineuse (10) et un détecteur (40) ainsi que des moyens de traitement de signaux (80) reliés au détecteur (40) pour analyser les signaux et une cellule collectrice de gaz, dispositif caractérisé en ce que:

la source lumineuse (10) se compose d'un émetteur (17) et d'un réflecteur (14) entourant les deux foyers (11, 11') et ayant la forme d'un ellipsoïde de rotation, l'émetteur étant constitué par une spirale placée à l'emplacement de l'un des deux foyers (11, 11') et partiellement transparent pour les rayons réfléchis par le réflecteur en forme d'ellipsoïde de rotation, et en ce qu'au moins l'un des deux points d'intersection du grand axe principal du réflecteur en forme d'ellipsoïde de rotation (14) est élargi vers une ouverture (15, 15') pour prendre un faisceau lumineux parallèle, étroitement regroupé et,

la cellule collectrice de gaz (49) est placée dans le faisceau lumineux, à l'intérieur de la source lumineuse (10).

2. Dispositif de détection optique selon la revendication 1, caractérisé en ce que la cellule collectrice de gaz (49) qui se trouve au voisinage de l'un des deux foyers (11, 11') est située dans le réflecteur (14) de façon à être séparée de l'émetteur (17) de manière étanche aux gaz.

3. Dispositif de détection optique selon le préambule de la revendication 1, caractérisé en ce que

la source lumineuse (10) se compose d'un émetteur (17) et d'un réflecteur (14) en forme d'ellipsoïde de rotation enveloppant les deux foyers (11, 11'), l'émetteur étant en forme de spirale placée à l'un des deux foyers (11, 11') et est partiellement transparent aux rayons réfléchis par le réflecteur en forme d'ellipsoïde de rotation, en ce qu'au moins l'un des deux points d'intersection de l'axe principal du réflecteur (14) en forme d'ellipsoïde de rotation est élargi pour former une ouverture (15, 15') pour la prise d'un faisceau lumineux parallèle, fortement regroupé et,

le détecteur (14) contient la cellule collectrice de gaz (41) et génère des signaux à l'aide de la lumière dans la cellule collectrice de gaz (41), signaux caractéristiques pour le gaz contenu dans la cellule collectrice de gaz (41).

4. Dispositif de détection optique selon la revendication 3, caractérisé par un microphone (14) prévu sur la cellule collectrice de gaz (41) pour recevoir l'effet photo-acoustique engendré au voisinage du faisceau lumineux incident dans la cellule collectrice de gaz (41).

5. Dispositif de détection optique selon la revendication 4, caractérisé par un tube capillaire (71, 71') dont une extrémité débouche dans la cellule collectrice de gaz (41) et dont l'autre extrémité forme l'entrée ou la sortie du gaz de mesure.

7. Dispositif de détection optique selon la revendication 5, caractérisé en ce que le dispositif d'échange de gaz (70) comprend une pompe à membrane (62).

8. Dispositif de détection optique selon la revendication 5, caractérisé en ce que le dispositif d'échange de gaz (70) est constitué par une ou deux pompes à membrane (62, 62′) avec des clapets (65, 65′) montés dans la membrane (66, 66′) et de sièges de clapets correspondants (67, 67′), les pompes à membrane (66, 66′) étant recouvertes sélectivement par des capots (68, 68′).

9. Dispositif de détection optique selon la revendication 1 ou 3, caractérisé en ce que le dispositif de modulation (20) se compose d'un disque (21, 32) rotatif placé dans le chemin du faisceau lumineux sortant des orifices de sortie de lumière (15, 15′), orifices qui sont munis de filtres à bande passante (31, 33, 33′, 33″) et/ou de cuvettes (34) remplies de gaz.

10. Dispositif de détection optique selon la revendication 1 ou 3, caractérisé en ce que sur l'axe principal prolongé, traversant l'orifice de sortie de lumière (15, 15′), il est prévu un miroir creux (42, 42′) placé à une distance telle du réflecteur (14) en forme d'ellipsoïde de rotation de façon qu'au moins un foyer de la calotte réfléchissante (42, 42′) coïncide avec l'un des foyers (11, 11′) du réflecteur.

11. Application du dispositif selon la revendication 4 pour contrôler le fonctionnement du dispositif d'échange de gaz (70), un microphone (48) placé dans la cellule collectrice de gaz (41) fournissant par l'intermédiaire du moyen de traitement de signaux (30) des signaux électriques correspondant à un signal de mesure photo-acoustique ainsi qu'un signal caractéristique des variations de pression engendrées par l'échange de gaz.

0 072 821

Fig.1

Fig.2

Fig.3

Fig.4

Fig.5

Fig.6

15

0 072 821

Fig.7

Fig.8

Fig.9

Fig.10

Fig.11

Fig.12

Fig.13

Fig.14

17

0 072 821

Fig.15   Fig.16

Fig.17

Fig.18   Fig.19

Fig.20   Fig.21

19

**Fig.22**

**Fig.23**

**Fig.24**

**Fig.25**

**Fig. 26**